Europäisches Patentamt

**European Patent Office**

Office européen des brevets

(11) Publication number: **0 204 581**
A2

# EUROPEAN PATENT APPLICATION

(21) Application number: **86304328.7**

(22) Date of filing: **06.06.86**

(51) Int. Cl.⁴: **G 02 B 6/44**

(30) Priority: **07.06.85 GB 8514389**

(43) Date of publication of application:
**10.12.86 Bulletin 86/50**

(84) Designated Contracting States:
**DE FR IT**

(71) Applicant: **Telephone Cables Limited**
**Chequers Lane**
**Dagenham Essex RM9 6QA(GB)**

(72) Inventor: **George, Edward Kitchener**
**93 Nelson Road**
**South Hornchurch Essex(GB)**

(72) Inventor: **Jung, Roger Erwin**
**38 Tufton Road**
**Chingford London. E4 8LE(GB)**

(74) Representative: **Kirby, Harold Victor Albert**
**Central Patent Department Wembley Office The General**
**Electric Company, p.l.c. Hirst Research Centre East Lane**
**Wembley Middlesex HA9 7PP(GB)**

(54) Joint closure housing.

(57) A joint closure for use in forming splices between fibres of optical cables has an end plate with a plurality of cable entry apertures, and a frame which supports a plurality of superposed and relatively movable organiser trays on to each of which fibres from the cables can be laid in a series of loops.

Fig. 1.

Croydon Printing Company Ltd.

-1-

TC/2728 EPC

Joint Closure Housing

This invention relates to joint closure housing for use in forming splices between optical fibres, and an object of the invention is to provide such a joint closure box which facilitates the formation of splices between optical fibres of a plurality of multi-fibre optical cables.

According to the invention a joint closure housing comprises an end plate having a plurality of cable entry apertures, a frame carried by the end plate and supporting a plurality of superposed and relatively movable splice organiser trays on to each of which fibres from the cables can be laid in a series of loops, and arranged to accommodate means for forming connections between selected pairs of optical fibres.

The organiser trays are preferably in the form of relatively slidable drawers, and the frame/tray assembly is preferably accommodated in a casing from which the assembly can be withdrawn for forming connections, the end plate being securable to a flange at the end of the casing with an intervening gasket to form a moisture-proof seal.

By disposing the optical fibres in loops on the organiser trays, and by arranging for the organiser trays to be removable to provide access to the individual fibres, when the frame/tray assembly has been withdrawn from the ousing, the formation of connections between individual fibres is facilitated.

One embodiment of the invention will now be described by way of example with reference to Figures 1 to 3 of the accompanying schematic drawing, in which

Figure 1 represents a side view of a joint closure housing in accordance with the invention,

Figure 2 represents an end view of the joint closure housing, and

Figure 3 represents a plan view of part of the housing.

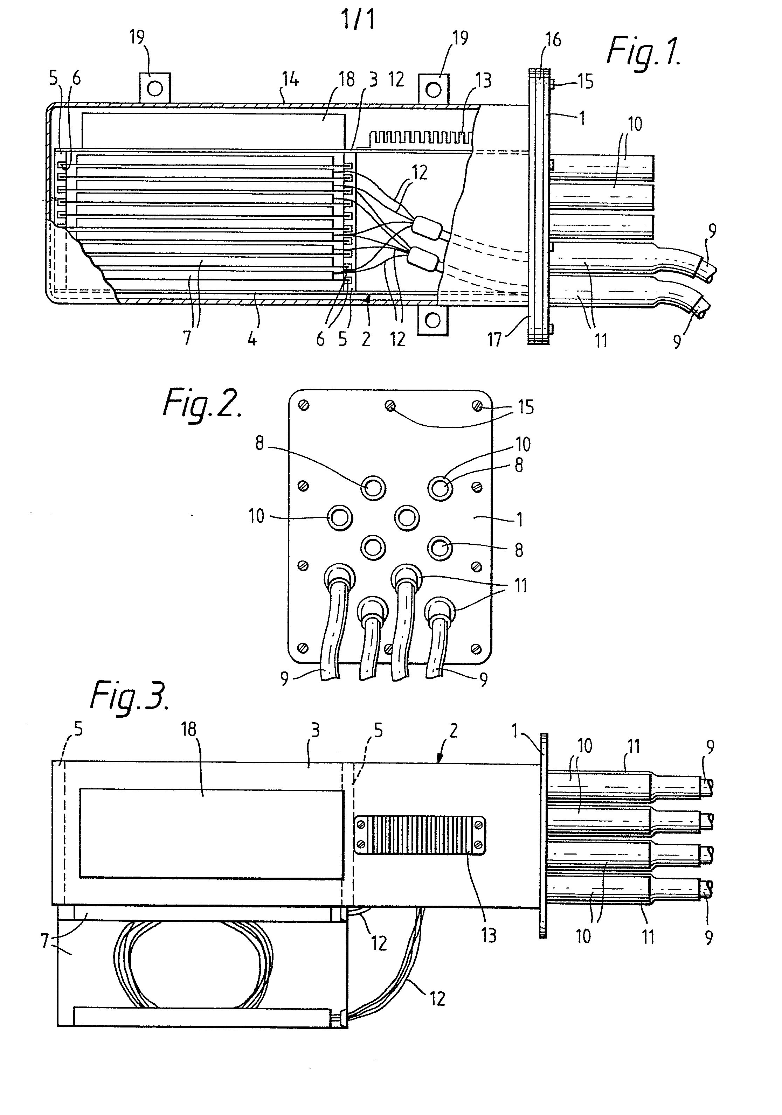

Referring to the drawings the joint closure housing comprises an end plate 1 carrying a frame 2 provided by upper and lower plates 3, 4 supporting between them two spaced tray supports 5, which are provided, on their inner surfaces, with ten horizontally-extending grooves 6. Each corresponding pair of grooves 6 supports between them a respective tray 7 which can be slid out sideways from the stack of trays in the form of a drawer, as shown in Figure 3.

The end plate 1 has ten cable entry apertures 8 through which the ends of up to ten optical cables 9 (only some of which are shown) can extend. Each cable entry is surrounded on the external surface of the plate by a cylindrical flange 10 and the cable ends are sealed against the inlet of moisture by covering the respective flange 10 and adjacent part of the cable 9 with a heat shrinkable sleeve 11 as known in the art. Any cable entries not used are sealed in use by suitable closed-ended shrinkable sleeves (not shown).

The optical fibres 12 from the cables 9 are taken to appropriate organiser trays 7 and are looped around the respective trays several times for example at least four. This provides excess lengths of fibres which facilitate the connection of desired pairs of cable using any suitable known form of connector devices.

In the case of connector boxes for use with cables incorporating, in addition to the optical fibres, at least one electrical conductor, the frame may carry an insulated connection block, as at 13, for interconnecting pairs of conductors (not illustrated).

The unit is arranged to be housed in a moisture-proof rectangular metal enclosure 14 having one open end, by sliding the frame/organiser tray assembly into the enclosure from that end. The enclosure is provided, around the open end, with an outwardly extending flange 17 to which the end plate 1 of the unit is arranged to be secured as by screws 15, a gasket 16 between the end plate and the flange 17 providing a moisture-proof seal.

A humidity detector may be provided on the frame 2 as at 18.

Brackets 19 are provided on the enclosure for fixing the joint closure housing to a wall or other support.

## CLAIMS

0204581

1. A joint closure housing for use in forming splices between optical fibres of a plurality of multi-fibre optical cables comprising an end plate having a plurality of cable entry apertures, a frame carried by the end plate and supporting a plurality of superposed and relatively movable splice organiser trays on to each of which fibres from the cables can be laid in a series of loops, and arranged to accommodate means for forming connections between selected pairs of optical fibres.

2. A joint closure housing according to Claim 1 wherein the organiser trays are in the form of relatively slidable drawers.

3. A joint closure housing according to Claim 1 or 2 wherein the cable entry apertures are each surrounded on the external surface of the end plate by a respective cylindrical flange, through which an end of a cable can extend into the housing.

4. A joint closure housing according to Claim 3 wherein, in use, each cable entry aperture through which a cable end extends is sealed by means of a heat-shrinkable sleeve covering the respective flange and adjacent part of the cable, any cable entry aperture not being used also being sealed.

5. A joint closure housing according to Claim 4 wherein each cable entry aperture not being used is sealed by a closed-ended heat shrinkable sleeve.

6. A joint closure housing according to any preceding Claim wherein the frame/tray assembly is accommodated in a casing from which the assembly can be withdrawn for forming connections, the end plate being securable to a flange at the end of the casing with an intervening gasket to form a moisture-proof seal.

7. A joint closure housing according to any

0204581

preceding Claim for use with cables incorporating, in addition to the optical fibres, at least one electrical conductor, wherein the frame carries an insulated connector block for interconnecting pairs of cables.

8.    A joint closure housing according to any preceding Claim wherein the frame carries a humidity detector.

0204581

1/1

Fig.1.

Fig.2.

Fig.3.